# FASCICULE DE BREVET EUROPEEN

(11) **EP 0 681 016 B1**
(45) Date de publication et mention de la délivrance du brevet: **25.11.1998**
(21) Numéro de dépôt: 95401016.1
(22) Date de dépôt: 03.05.1995
(51) Int. Cl.: C09K 7/02

(54) **Procédé et fluide utilisés dans un puits - application au forage**
Verfahren und Flüssigkeiten die in ein Bohrloch verwendet sind - Verwendung für Bohrung
Method and fluids used in a well application for drilling

(30) Priorité: 04.05.1994 FR 9405488
(43) Date de publication de la demande: 08.11.1995
(73) Titulaire: INSTITUT FRANCAIS DU PETROLE, 92500 Rueil Malmaison (FR); SOFITECH N.V., 2030 Antwerpen (BE)
(72) Inventeur: Audibert, Annie, F-78110 Le Vesinet (FR); Argillier, Jean-François, F-92150 Suresnes (FR); Lecourtier, Jacqueline, F-92250 La Garenne Colombes (FR); Bailey, Louise, Comberton, Cambridge CB3 7EQ (GB); Reid, Paul I., St. Neots, Cambridgeshire PE 19 3RJ (GB)
(74) Mandataire: Coadour, Jean

(56) Documents cités:
- WO-A-93/15164
- US-A- 4 529 523
- US-A- 5 208 216

## Description

La présente invention concerne un fluide à base d'eau de composition optimisée pour résoudre les problèmes rencontrés au cours d'opérations telles que le forage, le conditionnement ou l'intervention dans un puits traversant au moins une formation géologique perméable.

Par conditionnement, il faut comprendre ce qui est communément appelé "complétion", c'est à dire les opérations de préparation ou d'équipement nécessaires à la mise en production d'une formation géologique à partir du puits foré. Ces opérations dites de "complétion" mettent en oeuvre des fluides particuliers appelés "fluides de complétion".

Par interventions, il faut comprendre les opérations effectuées dans un puits producteur ou potentiellement producteur. Ces opérations sont communément appelées "work-over". Les fluides de "work-over" peuvent être mis en oeuvre dans le puits producteur en circulation de façon comparable à des fluides de forage ou sous forme de fluide tampon ou "spacer".

Tous ces fluides, de forage, de conditionnement ou d'intervention ont notamment en commun l'adaptation physico-chimique de leur formulation à la nature des formations géologiques avec lesquelles ils sont en contact et aux fonctions principales auxquelles ils sont voués. En effet, il est connu que les fluides mis en oeuvre dans un puits ont généralement la plupart des fonctions suivantes :
- maintien de la stabilité des parois du puits,
- filtration contrôlée dans les formations perméables,
- bonne capacité de nettoyage du fond du puits en circulation,
- réglage aisé de la masse volumique,
- stabilité en température et dans le temps,
- pas ou peu de contamination par les argiles ou les électrolytes,
- fabrication et traitement aisés, etc....

Pour réaliser ces fonctions combinées complexes qui peuvent être incompatibles, il faut choisir et régler les quantités relatives d'additifs adaptés aux fonctions désirées dans le contexte des contraintes du puits. Pour cela, selon la nature des problèmes de formations géologiques rencontrées, de leurs conditions de fond, telles pression et température, et selon les fonctions principales indispensables au fluide, la composition du fluide de puits est généralement le résultat d'un compromis entre plusieurs fonctions et le coût des additifs indispensables.

Le fluide selon l'invention est une formulation comportant en solution aqueuse un polymère hydrophile/hydrophobe dénommé Hb1 et décrit dans le document FR-2686892, apparenté au document PCT/FR93/00090 publié sous le numéro WO 93/15164. Le polymère Hb1 est défini dans ces documents comme ayant une structure du type **-(Hb)-(Hy)-** avec une répartition statistique, ladite structure étant issue de la polymérisation radicalaire de monomères éthyléniques contenant des fonctions carboxyliques, notamment un copolymère d'acrylate/acrylate d'alkyle C₁-C₃₀ correspondant à la formule suivante : 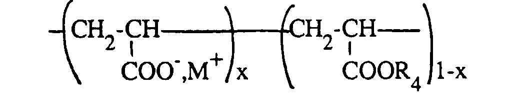 où x est compris entre 0,4 et 0,8, où M est H ou Na ou K ou tout autre ion monovalent, et où la longueur des motifs hydrophobes R₄ est une chaine alkyle, alkyle-aryle C₁-C₃₀ choisie en fonction de la masse moléculaire dudit polymère selon les règles suivantes :
- pour un polymère ayant une masse moléculaire inférieure à environ 10⁵ daltons, R₄ contient au moins deux atomes de carbone,
- pour un polymère ayant une masse moléculaire comprise entre environ 10⁵ et 2,5 10⁶ daltons, R₄ contient au moins quatre atomes de carbone.

Dans une variante, le polymère Hb1 prend le nom de H3 lorsque x a la valeur de 0,8, que R₄ comporte quatre atomes de carbone et que la masse moléculaire du polymère est comprise entre 10⁴ et 5 10⁴ daltons, et préférentiellement proche de 1,7 10⁴ daltons.

Le fluide selon l'invention comporte également un dérivé cellulosique modifié hydrophobiquement. Dans une première variante de l'invention, le dérivé cellulosique est de la cellulose hydroxy éthylée modifiée hydrophobiquement (HM HEC).

Les dérivés cellulosiques modifiés hydrophobiquement découlent principalement des dérivés cellulosiques classiquement utilisés comme la cellulose carboxy méthylée (CMC), la cellulose hydroxy éthylée (HEC) ou la cellulose hydroxy propylée (HPC). Ces dérivés peuvent être modifiés chimiquement par l'incorporation de groupements alkyles par réaction chimique affectant certains motifs cellulosiques. Ces dérivés cellulosiques modifiés hydrophobiquement, notamment HM HEC, HM CMC, HM HPC sont décrits dans le document EP-A1-465992.

Le polymère HM HEC ou cellulose hydroxy éthylée modifiée hydrophobiquement a été décrit dans le document US-A-4228277 ainsi que dans la publication "Synthesis and solution properties of hydrophobically modified hydroxyethyl cellulose" de A.C. SAU et L.M. LANDOLL, dans "Polymers in aqueous media: performance through association", J.E. Glass (Ed), Adv. Chem Ser. 213, ACS Wash. 1989.

La HM HEC, non ionique et hydrosoluble peut être préparée à partir de la HEC ou cellulose hydroxy éthylée, par incorporation chimique d'une longue chaîne alkyle entre C₄ et C₂₅, de préférence entre 8 et 18 atomes de carbone pour le motif hydrophobe.

Le motif hydrophobe est lié à la cellulose par une liaison éther ou ester, préférablement éther car ce type de liaison est plus stable lorsque le polymère est en solution aqueuse.

Le taux de motifs hydrophobes peut varier de 0,2 à environ 5%, de préférence entre 0,2 et 1,5% et plus particulièrement entre 0,2 et 1%.

Le polymère HM HEC peut avoir un taux de substitution molaire de motif hydroxy éthyle d'au moins 1,5, de préférence entre 1,5 et 4, c'est-à-dire de 1,5 à 4 moles de substituants hydroxy éthylés par motif anhydroglucose, et une masse moléculaire relativement faible, c'est-à-dire inférieure à 2000000 daltons et de préférence entre 20000 et 500000 (soit un degré de polymérisation de 75 à 1800).

Le fluide selon la présente invention comporte également une quantité utile d'un polymère dénommé HM PAM, issu de la polymérisation de motifs hydrophiles avec un motif hydrophobe. Le motif hydrophile comporte :
- de l'acrylamide suivant la formule suivante : 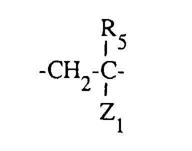 où R₅ est H ou CH₃, et Z₁ est CONH₂,
- et éventuellement des co-monomères d'acide acrylique, d'acrylate ou de sulfonate suivant la formule suivante : 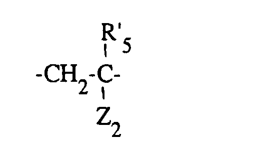 où R'₅ est H ou CH₃, et Z₂ est COOH ou COO⁻, M⁺ ou CONHR₁SO₃⁻, M⁺; R₁ est H ou un radical alkyle, aryle ou alkyl-aryle de C₁-C₃₀.

Le motif hydrophobe du polymère HM PAM peut avoir alors une des formes suivantes : N-alkylacrylamide, alkylacrylate, acrylamide N-substituée ou un acrylate substitué, la partie substituée étant un tensio-actif non ionique, ledit motif hydrophobe ayant la formulation générale suivante : 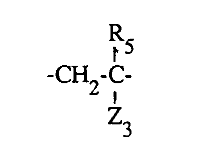 où R₅ est H ou CH₃, et Z₃ est COOR₇, COOR₂, CONR₁R₂, ou CONR₁R₇, R₇ étant un tensioactif non ionique et R₂ un radical alkyle, aryle ou alkyl-aryle de C₁-C₃₀ ; R₁ est H ou un radical alkyle, aryle ou alkyl-aryle de C₁-C₃₀.

Les polymères hydrosolubles HM PAM sont obtenus par copolymérisation de monomères hydrosolubles avec un monomère hydrophobe selon un rapport molaire hydrophile/hydrophobe de 90/10 à environ 99,995/0,005, préférentiellement de 95/5 à environ 99,9/0,1. Leur masse moléculaire est supérieure à 10⁶ daltons.

Le polymère HM PAM sera dénommé H1PAM lorsqu'il sera un copolymère d'acrylamide et de méthacrylate de nonyle (c'est à dire R₅ est CH₃; Z₃ est COOR₇ avec R₇=C₉H₁₉), lorsqu'il a une masse moléculaire d'environ 8 10⁶ daltons et un taux de motifs hydrophobes compris entre 0,5 et 1,5%.

La conjonction de ces trois polymères Hb1, HM PAM et le dérivé cellulosique modifié hydrophobiquement apporte au fluide selon l'invention de bonnes caractéristiques comme fluide de puits, c'est à dire un fluide pouvant être utilisé pour le forage, le conditionnement et les interventions dans un puits. De plus, la demanderesse a sélectionné un quatrième polymère du type polysaccharide dont l'addition dans la formulation selon l'invention permet notamment d'optimiser la rhéologie du fluide tout en renforçant certaines qualités de la formulation. Préférentiellement, les polysaccharides ayant une structure moléculaire rigide ou semi-rigide en double ou triple hélice conviennent à la formulation comportant les trois autres polymères. Il peut s'agir par exemple de scléroglucane ou xanthane.

Ainsi, la présente invention concerne un fluide utilisé dans un puits foré à travers au moins une formation géologique perméable. Le fluide comporte en solution aqueuse une quantité efficace de :
a) un polymère dénommé Hbl défini ci-dessus,
b) un polymère, dénommé HM PAM défini ci-dessus,
c) un dérivé cellulosique modifié hydrophobiquement,
d) un polymère du type polysaccharide ayant une structure moléculaire rigide ou semi-rigide en double ou triple hélice.

Le polymère Hb1 peut avoir environ pour x la valeur de 0,8, R₄ peut comporter quatre atomes de carbone et le polymère peut avoir une masse moléculaire comprise entre 10⁴ et 5 10⁴ daltons, et préférentiellement proche de 1,7 10⁴ daltons.

Le polymère HM PAM peut avoir une masse moléculaire comprise entre 10⁶ et 10⁷ daltons et un taux de motifs hydrophobes compris entre 0,5 et 5%.

Le polymère HM PAM, dénommé alors H1PAM peut avoir R₅=CH₃, Z₃=COOR₇ avec R₇=C₉H₁₉, une masse moléculaire d'environ 8 10⁶ daltons et un taux de motifs hydrophobes compris entre 0,5 et 1,5%.

Le dérivé cellulosique peut être de la cellulose hydroxy éthylée modifiée hydrophobiquement.

La cellulose hydroxy éthylée modifiée peut comporter un radical alkyle hydrophobe comportant entre 4 et 25 atomes de carbone, et préférentiellement entre 8 et 18.

La masse moléculaire de la cellulose hydroxy éthylée modifiée peut être inférieure à 2000000 daltons et préférentiellement comprise entre 20000 et 500000 daltons.

Le polymère du type polysaccharide peut être choisi parmi le groupe formé par le xanthane et le scléroglucane.

Le fluide peut comporter au moins un électrolyte à des concentrations pouvant atteindre la saturation.

L'électrolyte peut être choisi dans le groupe constitué par le chlorure, le bromure, le carbonate, l'acétate, le formiate, le sulfate, le silicate, le phosphate, de sodium, de potassium, de calcium, de magnésium, ou de zinc.

Le fluide peut comporter entre 0,5 et 30 g/l de Hb1, de dérivé cellulosique modifié hydrophobiquement, de HM PAM et entre 0,5 et 20 g/l de polymère du type polysaccharide.

Le fluide peut comporter entre 0,5 et 10 g/l de H3, de HM HEC et de H1PAM, entre 1 et 5 g/l de polymère du type polysaccharide, préférentiellement du xanthane, entre 5 et 100 g/l de KCl ou de NaCl et entre 0 et 30 g/l d'argile réactive.

L'invention concerne un procédé mis en oeuvre dans un puits foré à travers au moins une formation géologique ayant une certaine perméabilité, le procédé comportant au moins l'une des opérations suivantes : forage d'un puits, conditionnement d'un puits, intervention dans un puits. Dans le procédé, on utilise un fluide comportant en solution aqueuse une quantité efficace de :
a) un polymère dénommé Hbl défini ci-dessus,
b) un polymère, dénommé HM PAM,
c) un dérivé cellulosique modifié hydrophobiquement,
d) un polymère du type polysaccharide.

Dans le procédé, dans lequel ladite formation géologique comporte des argiles réactives, on peut contrôler l'inhibition du gonflement et/ou la dispersion desdites argiles par ledit fluide en optimisant la quantité de polymère Hb1.

La rhéologie du fluide peut être ajustée en optimisant la quantité de polymère du type polysaccharide.

On peut contrôler la réduction de filtration en optimisant la quantité de dérivé cellulosique modifié hydrophobiquement,

On peut régler la capacité du fluide à ne pas déliter des débris solides en optimisant la quantité de HM PAM dans ledit fluide.

Dans le procédé, la formulation dudit fluide peut ne pas comporter d'adjonction d'argiles réactives.

Le procédé peut être appliqué au forage de petit diamètre ou à forte inclinaison par rapport à la verticale.

Les avantages et les propriétés du fluide selon la présente invention seront mieux compris à la lecture des tests ci-après décrits. Les fluides testés ont été systématiquement homogénéisés dans un agitateur du type Hamilton Beach.

Il est mis en évidence que les différents composants de la formulation du fluide selon l'invention ont des propriétés primaires et, pour la plupart, des effets de renforcement de la propriété primaire d'au moins un autre composant. La demanderesse a mis en évidence des effets synergétiques multiples entre les composants du fluide.

### Essai 1 : INHIBITION DE GONFLEMENT

Le polymère Hb1 a été décrit dans la demande FR-A-2686892 et ses capacités d'inhibiteur de gonflement y sont démontrées par des essais avec le polymère H3.

L'essai suivant a été effectué dans un appareillage de mesure du gonflement d'une roche. n comporte une enceinte remplie du fluide testé dans laquelle on place un échantillon de matériau argileux d'environ 3 cm de long et 2 cm de diamètre. L'échantillon est entièrement immergé dans le fluide. Un capteur de déplacement, fixé sur le bâti de l'appareillage, mesure le déplacement d'une pointe en fonction du temps, la pointe étant appuyée sur l'échantillon. Les essais durent environ 8 à 10 heures. On constate une stabilisation du gonflement de l'échantillon après environ 3 à 4 heures. L'échantillon est en matériau argileux appelé "shale Pierre I" contenant environ 10% de smectite, 30% d'illite et 1% de kaolinite, dont l'activité est d'environ 0,9.

Le tableau ci-desssous donne les resultats obtenus comparativement en présence de quatres solutions :
- S1 : de l'eau distillée,
- S2 : solution comportant du xanthane (2 g/l), du HM HEC (2 g/l) et du H1PAM (2 g/l), KCl (50g/l)
- S3 : solution comportant du H3 (4 g/l), xanthane (2 g/l), du HM HEC (2 g/l) et du H1PAM (2 g/l), KCl (50 g/l).
- S4 : solution comportant du H3 (4 g/l), KCl (5 g/l).

| **Formulations** | **S1** | **S2** | **S3** | **S4** |
|---|---|---|---|---|
| **% d'expension linéaire** | 9,4 | 4,6 | 4,3 | 4,5 |

Il est confirmé que la formulation S3, correspondante à une variante selon l'invention, a de bonnes capacités d'inhibition du gonflement. Par ailleurs, on constate que l'échantillon dans le fluide S1 n'a plus de tenue mécanique.

Un autre essai a été réalisé dans des conditions beaucoup plus réactives. On met en contact un échantillon de montmorillonite Green Bond avec différentes solutions. L'échantillon est sous la forme d'une pastille d'argile compactée sous pression de 100 à 1500 bars et contenant 43% de calcium. La pastille utilisée a une activité de 0,5. L'électrolyte utilisé a une activité comprise entre 1 et 0,96. Les conditions d'expérimentation sont: température de 30°C, rapport volumique solide/liquide égal à 0,1 avec une agitation douce et une cinétique suivie sur 3 h.

On mesure l'expansion de la pastille, les résultats sont exprimés en pourcentage.

Les formulations S1, S3 et S4, définies plus haut ont été également utilisées pour cet essai, de même qu'une formulation S5 contenant uniquement 50 g/l KCl :

| **Formulations** | **S1** | **S3** | **S4** | **S5** |
|---|---|---|---|---|
| **% d'expansion linéaire** | * | 40 | 300 | * |

| | | | | |
|---|---|---|---|---|
| * désintégration totale de la pastille | | | | |

Les résultats montrent que pour une pastille beaucoup plus réactive que l'échantillon du premier essai qui ne contient que 10% de Smectite et en conditions de déséquilibre d'activité entre la pastille et l'électrolyte, les capacités d'inhibition du gonflement de la formulation S3 sont au moins aussi bonnes que pour le H3 seul, si on se ramène aux mêmes conditions de salinité. En présence d'eau distillée ou d'une solution contenant 50 g/l KCl, la pastille est totalement désintégrée, mettant ainsi en évidence sa très forte réactivité.

### Essai 2 : TENUE DES CUTTINGS

Cet essai permet de mesurer la capacité qu'a un fluide de forage, de conditionnement ou d'intervention à ne pas détruire la cohésion d'un solide en suspension dans le fluide, en particulier un débris de formation géologique (cutting). En général, cette fonction est dénommée comme la capacité d'un fluide à ne pas déliter des cuttings (débris solide). L'intérêt de cette fonction est notamment de limiter le taux de particules fines afin : de ne pas modifier les propriétés rhéologiques du fluide, de faciliter la séparation de solides dans les installations de surface, d'accélérer le nettoyage du puits.

### Description de la procédure d'essais :

La plupart des essais ont été réalisés sur des "cuttings" ou morceaux d'argile dite "London clay" de taille comprise entre 1 mm et 2,8 mm conservés dans un dessiccateur de telle manière à ce que leur activité en eau soit de l'ordre de 0,9. L'argile London clay contient environ 23% de smectite, 29% d'illite et 11% de kaolinite.

Trois grammes d'argile sont introduits dans une cellule de 300 cm3 contenant 100 cm3 du fluide à tester. Quatre billes d'acier de 16 mm de diamètre sont ensuite introduites dans la cellule. Cette cellule est placée sur un système de mise en rotation pendant une heure et à une température de 30°C.

Le fluide est ensuite tamisé à travers deux filtres en série, dont la taille respective des mailles est de 1 mm et 0.25 mm. On récupère l'argile sur chacun des tamis. Après séchage, l'argile récupérée est pesée.

Les résultats sont donnés sous la forme de pourcentage en poids d'argile récupéré sur chaque tamis par rapport au poids initial d'argile mis en suspension.

### Tests 1: Comparaison de différentes formulations

Le tableau ci-dessous regroupe les résultats obtenus avec quatres formulations. Par rapport à une formulation simple standard F1, le test met clairement en évidence les bons résultats obtenus avec les formulations F2 et surtout la formulation F3 associant le H3, le H1PAM et la HM HEC.

### Formulations :

**F1** : Xanthane (4 g/l), CMC LV (10 g/l), KCl (50 g/l)
**F2** : Xanthane (4 g/l), H3 (4 g/l), CMC LV (10 g/l), H1PAM (2 g/l), KCl (50 g/l)
**F3** : Xanthane (4 g/l), H3 (4 g/l), HM HEC (4g/l), H1PAM (3 g/l), KCl (50 g/l)
**F4** : Xanthane (4 g/l), CMC LV (10 g/l), H3 (4 g/l), KCl (50 g/l)

| **Formulations** | **F1** | **F2** | **F3** | **F4** |
|---|---|---|---|---|
| **% de déblais récupérés de taille d>1mm** | 16 | 42 | 84 | 16 |
| | | | | |
| **% de déblais récupérés de taille d (1 mm>d>0.25 mm)** | 80 | 50 | 10 | 80 |

La comparaison des tests 1 et 4 montre que le H3 n'a pas d'influence notable sur la tenue des cuttings.

La comparaison des tests 2 et 3 montre que l'association de la HM HEC avec le H1PAM permet une meilleure tenue des déblais. Ceci semble notamment dû aux interactions entre les deux polymères qui permettent ainsi une meilleure encapsulation des déblais et évitent ainsi leur dispersion.

### Test 2: Influence de la concentration en polyacrylamide modifié hydrophobiquement (H1PAM)

Dans cette série d'essais il a été étudiée l'influence de la concentration en H1PAM.

Formulation de base : H3 (4g/l), Xanthane (2 g/l), HM HEC (4g/l), KCl (50 g/l)

A cette formulation de base sont ajoutées différentes concentrations de H1PAM.

| **Concentration en H1PAM (g/l)** | **0** | **0,5** | **1** | **2** | **3** |
|---|---|---|---|---|---|
| **% de déblais récupérés de taille d>1mm** | 2 | 45 | 55 | 71 | 84 |
| | | | | | |
| **% de déblais récupérés de taille d (1 mm>d>0.25 mm)** | 97 | 50 | 39 | 18 | 10 |

Il est clair que l'influence du H1PAM est forte sur les bons résultats obtenus par ce type de test. L'optimum de concentration de H1PAM semble compris entre 2 et 4 g/l dans ces conditions.

### Test 3: Essai de délitage des déblais réalisés sur des pastilles de bentonite (100% montmorillonite du Wyoming) recompactée: système très réactif

Dans cette série ont été utilisés des déblais constitués par des pastilles de bentonite recompactées. La cellule contenant la suspension argile+formulation est maintenue en rotation pendant 16 heures. Aucune bille n'est introduite dans la cellule. L'argile utilisée est une montmorillonite du Wyoming de composition 70 % Na, 30% Ca. Les pastilles de départ ont une forme cylindrique (hauteur = 5 mm, diamètre = 5 mm), préparées par compaction de l'argile dans une presse à 4 à 5 t/cm². Elles ont alors une activité en eau d'environ 0,5. Les résultats sont représentés en pourcentage en poids de déblais récupérés ayant une taille supérieure à 3,15 mm.

Formulation de base : Xanthane (2 g/l), KCl (50 g/l)

A cette formulation de base sont ajoutés différents agents indiqués dans le tableau ci-dessous

| **Produits ajoutés à la formulation de base** | **% de déblais récupérés (d>3.15mm)** |
|---|---|
| rien | 0 |
| CMC LV (10 g/l) + H3 (4 g/l) | 3 |
| Glycol (40 g/l) | 2 |
| PHPA (2 g/l) | 17 |
| H1PAM (2 g/l) + H3 (4 g/l) | 18 |
| HM HEC (4 g/l) + H3 (4 g/l) | 4 |
| H1PAM (2 g/l) | 17 |

La CMC LV est un produit fabriqué par la société Aqualon.

Le PHPA est un polyacrylamide partiellement hydrolysé fabriqué par la société SNF Floerger.

Ces résultats confirment que même sur un système très réactif, le comportement d'un fluide contenant du H1PAM est bon.

### Essai 3: CONTAMINATION PAR LES SOLIDES

Ces tests évaluent le comportement du fluide selon l'invention en présence de bentonite non préhydratée. Ils mesurent l'évolution de la viscosité (mPa.s) du fluide, pour différents gradients de cisaillement (s⁻¹ ) et différentes teneurs en bentonite (g/l). Ces mesures sont faites avec un viscosimètre conventionnel du type FANN.

Le fluide comporte : Xanthane (2 g/l), H3 (4 g/l), HM HEC (4 g/l), H1PAM (2 g/l), KCl (5%)

| **Teneur en bentonite (g/l)** | **0** | **21** | **105** | **160** |
|---|---|---|---|---|
| **Taux de cisaillement (s**^{**-1**}**)** | | | | |
| **17** | 270 | 300 | 380 | 380 |
| **170** | 65 | 70 | 82 | 85 |
| **1021** | 23 | 28 | 31 | 32 |

Le test suivant permet la comparaison avec une formulation d'un fluide classique à base d'eau et comportant du xanthane (4 g/l), de la CMC (10 g/l) et du KCl (50 g/l).

| **Teneur en bentonite (g/l)** | **0** | **21** | **105** | **160** |
|---|---|---|---|---|
| **Taux de cisaillement (s**^{**-1**}**)** | | | | |
| **17** | 270 | 300 | 420 | 440 |
| **170** | 55 | 55 | 60 | 65 |
| **1021** | 23 | 24 | 28 | 32 |

Si l'on compare les deux formulations, on notera que la première formulation, correspondante à une des variantes du fluide de l'invention, présente un meilleur comportement lors de la contamination par les solides. En particulier, l'augmentation de viscosité avec l'augmentation du pourcentage de solides contaminants, mesurée pour de faible gradient de cisaillement, est bien moindre et atteint même un palier avec la première formulation, contrairement à la deuxième formulation, correspondante à une formulation classique à base d'eau. Ceci permet d'éviter, ou au moins de limiter, l'opération de retraitement du fluide en surface, en particulier la dilution. Le coût opérationnel peut ainsi être diminué.

### Essai 4: CONTROLE DU FILTRAT

### Test 1: Comparaison avec des formulations comportant des réducteurs de filtrat classiques (CMC LV et HEC)

Le fluide de base comporte du xanthane (4 g/l), H3 (4 g/l), KCl (5%) et un réducteur de filtrat : CMC LV, HEC ou HM HEC.

La viscosité VP est donnée en milli Pascal.seconde (mPa.s), la contrainte seuil YV (Yield Value) en unité usuelle, soit en lb/100 ft². Les résultats de YV seront multipliés par 0,4788 pour obtenir une valeur en Pa.

| **Réducteur de filtrat** | **CMC LV** | **HEC** | **HM HEC** |
|---|---|---|---|
| **Concentration (g/l)** | 10 | 2 | 4 |
| **Filtrat API - 7'30 (cm**^{**3**}**)** | 97 | 292 | 61 |
| **Filtrat API - 30' (cm**^{**3**}**)** | 102 | 318 | 69 |
| **VP (mPa.s)** | 13 | 11 | 16 |
| **YV (lb/100 ft**^{**2**}**)** | 14.5 | 15.5 | 14 |

On peut noter que l'utilisation de HM HEC permet de réduire fortement le filtrat dans les formulation sans solides.

### Test 2 : Influence de la concentration en HM HEC :

Le fluide de base comporte du xanthane (2 g/l), H3 (4 g/l), HM HEC (0, 2 ou 4 g/l), HlPAM (2 g/l) et de la baryte de Chaillac pour une densité d=1,2.

On ne sortira pas du cadre de la présente invention si on utilise des produits alourdissants conventionnels, autres que la baryte, tels le carbonate de calcium, la pyrite, la galène.

| | | | |
|---|---|---|---|
| **Concentration en HM HEC (g/l)** | 0 | 2 | 4 |
| **Filtrat API - 7'30 (cm**^{**3**}**)** | 4,5 | 3,1 | 2,7 |
| **Filtrat API - 30' (cm**^{**3**}**)** | 8,6 | 5,7 | 5 |
| **VP (mPa.s)** | 12 | 12 | 13 |
| **YV (lb/100 ft**^{**2**}**)** | 3 | 7 | 11 |

Dans les tests, l'épaisseur de cake est inférieure à 1 mm. La présence de HM HEC permet de réduire le filtrat, et ce pour une concentration comprise entre 2 et 4 g/l.

On notera que la valeur de volume filtré est particulièrement faible et ce malgré l'absence d'argile. On sait qu'un cake de paroi relativement imperméable est constitué d'un réseau de particules d'argiles et de polymères. Or, la formulation testée ici, dans les conditions présentes, permet la constitution d'un tel réseau et ce en l'absence d'argile. Ici, les interactions hydrophobes polymère/polymère permettent la constitution d'un tel réseau et ce en l'absence d'argile.

### Test 3 : Influence de la présence de H1PAM

Le fluide comporte du xanthane (2 g/l), H3 (4 g/l), HM HEC (2 g/l), HM PAM (0 et 2 g/l, et de la baryte de Chaillac pour obtenir une densité d=1.2

| | | |
|---|---|---|
| **Concentration en H1PAM (g/l)** | 0 | 2 |
| **Filtrat API - 7'30 (cm**^{**3**}**)** | 3,6 | 3,1 |
| **Filtrat API - 30' (cm**^{**3**}**)** | 7,6 | 5,7 |
| **VP (mPa.s)** | 18 | 12 |
| **YV (lb/100 ft**^{**2**}**)** | 2 | 7 |

Dans les deux tests, l'épaisseur de cake est inférieure à 1 mm.

On notera que l'association de HM HEC avec le HM PAM permet d'obtenir un meilleur contrôle de la réduction du filtrat.

### Essai 5 : INFLUENCE DE LA CONCENTRATION EN PRODUIT VISCOSIFIANT

Le fluide comporte du xanthane comme additif de réglage de la viscosité, H3 (4 g/l), HM HEC (4 g/l), H1PAM (2 g/l), KCl (5%).

| | | |
|---|---|---|
| **Concentration en xanthane (g/l)** | 4 | 2 |
| **Filtrat API - 7'30 (cm**^{**3**}**)** | - | 52 |
| **Filtrat API - 30' (cm**^{**3**}**)** | - | 60 |
| **VP (mPa.s)** | 17 | 13 |
| **YV (lb/100 ft**^{**2**}**)** | 21 | 11 |

La présence de H1PAM permet de diminuer la quantité de xanthane dans la formulation. Ceci est un avantage en particulier vis à vis du coût de la boue.

### Essai 6 : INFLUENCE DE LA SALINITE

Le fluide comporte du xanthane (2 g/l), H3 (4 g/l), HM HEC (2 g/l), H1PAM (2 g/l), KCl (5%) et de la baryte de Chaillac pour obtenir une densité d=1,2.

Composition de l'eau du robinet: Ca 150 ppm

Composition de l'eau de mer reconstituée: NaCl (26,62 g/l), KCl (0,75 g/l), CaCl₂, 2 H₂O (1,616 g/l), MgCl₂, 6 H₂O (5,27 g/l), MgSO₄, 7 H₂O (7,394 g/l). Les polymères sont dispersés directement dans l'eau de mer reconstituée.

| | **(A)** | **(B)** | **(C)** |
|---|---|---|---|
| **Filtrat API - 7'30 (cm**^{**3**}**)** | 3,1 | 3,1 | 2,2 |
| **Filtrat API - 30' (cm**^{**3**}**)** | 5,7 | 5,4 | 4,7 |
| **VP (mPa.s)** | 12 | 20 | 13 |
| **YV (lb/100 ft**^{**2**}**)** | 7 | 5 | 6 |
| **(A) : Eau distillée+KCl 5%** | | | |
| **(B): Eau du robinet+KCl 5%** | | | |
| **(C): Eau de mer reconstituée** | | | |

L'épaisseur de cake est inférieure à 1 mm dans tous les cas. La réduction de filtrat est bonne quelle que soit la salinité.

### ESSAI 7 : INFLUENCE DE LA BARYTE (d=1.2, KCL 5%)

Le fluide comporte du xanthane (2 g/l), H3 (4 g/l), HM HEC (2 g/l), H1PAM (2 g/l).

La granulométrie moyenne des barytes utilisées pour le test est de 20 micromètres pour la baryte de Chaillac, et de 8 micromètres pour la baryte commercialisée par la société IDF.

| **Type de baryte** | **Chaillac** | **IDF** |
|---|---|---|
| **Filtrat API - 7'30 (cm**^{**3**}**)** | 3,1 | 2,7 |
| **Filtrat API - 30' (cm**^{**3**}**)** | 5,7 | 5,9 |
| **VP (mPa.s)** | 14 | 12 |
| **YV (lb/100 ft**^{**2**}**)** | 7 | 8 |

Dans les deux cas, l'épaisseur de cake est de l'ordre de 0.5 mm.

### ESSAI 8 : INFLUENCE DE LA TENEUR EN BARYTE

Le fluide de base comporte du xanthane (2 g/l), H3 (4 g/l), HM HEC (2 g/l), H1PAM (2 g/l). La baryte utilisée est de la baryte de Chaillac.

| | | |
|---|---|---|
| **Concentration en Baryte (g/l)** | 30 | 210 |
| | (d=1,07) | (d=1,2) |
| **Filtrat API - 7'30 (cm**^{**3**}**)** | 4,2 | 3,1 |
| **Filtrat API - 30' (cm**^{**3**}**)** | 7,2 | 5,7 |
| **VP (mPa.s)** | 10 | 14 |
| **YV (lb/100 ft**^{**2**}**)** | 6 | 7 |

Dans les deux cas, l'épaisseur de cake est de l'ordre de 0.5 mm.

Ce test met en évidence qu'en présence d'une faible quantité de particules solides, telles de baryte, le volume de filtrat est très faible. De la même façon, la présence d'une teneur de solides forés, même faible, permet d'obtenir un volume de filtrat faible.

### ESSAI 9 : INFLUENCE DE LA TEMPERATURE DE FILTRATION

Le fluide de base comporte du xanthane (2 g/l), H3 (4 g/l), HM HEC (2 g/l), H1PAM (2 g/l) et de la baryte de Chaillac pour une densité d=1,2.

| | | | |
|---|---|---|---|
| **Température (°C)** | 30 | 90 | 120 |
| **Filtrat API - 7'30 (cm**^{**3**}**)** | 3,1 | 9,2 | 8,1 |
| **Filtrat API - 30' (cm**^{**3**}**)** | 5,7 | 18,5 | 15,8 |
| **VP (mPa.s)** | 14 | - | - |
| **YV (lb/100 ft**^{**2**}**)** | 7 | - | - |
| **Epaisseur du cake (mm)** | 0,5 | 2,5 | 1,5 |

Il est connu que la plupart des fluides à base de polymère ont une viscosité qui diminue avec la température, ce qui entraîne une augmentation du volume filtré avec l'augmentation de la température, en particulier au-dessus de 50°C. Au contraire, la formulation selon l'invention montre que le volume filtré reste acceptable, même à 120°C. Il semble que les renforcements des interactions hydrophobes avec l'augmentation de la température pallient cet effet.

### ESSAI 10: INFLUENCE DE LA TEMPERATURE

Le fluide comporte du xanthane (2 g/l), H3 (4 g/l), HM HEC (4 g/l), H1PAM (2 g/l), Kcl 5%.

Le vieillissement a lieu en conditions statiques dans une cellule du type Baroid, pendant 24 heures et en présence d'oxygène.

Variation de la viscosité relative µ_{**r**} par rapport à la viscosité initiale µ_{**r0**} mesurée à 30°C:

| **Température** | µ_{**r**}/µ_{**r0**} |
|---|---|
| 90°C | 1 |
| 120°C | 0.84 |
| 140°C | 0.23 |
| 160°C | 0.1 |

On observe ainsi une très bonne stabilité de la formulation testée à 120°C. La dégradation observée pour des températures supérieures est consécutive à la propriété bien connue du xanthane de se dissocier en température. La dégradation du xanthane se fait aux alentours de 120°C, en fonction des conditions de salinité.

## Revendications

1. Fluide utilisé dans un puits foré à travers au moins une formation géologique perméable, caractérisé en ce qu'il comporte en solution aqueuse une quantité efficace de :
a) un polymère dénommé Hb1 ayant une structure du type **-**(**Hb**)**-**(**Hy**)**-** avec une répartition statistique, ladite structure étant issue de la polymérisation radicalaire de monomères éthyléniques contenant des fonctions carboxyliques, notamment un copolymère d'acrylate/acrylate d'alkyle C₁-C₃₀ correspondant à la formule suivante : 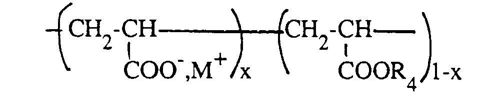 où x est compris entre 0,4 et 0,8, où M est H ou Na ou K ou tout autre ion monovalent, et où la longueur des motifs hydrophobes R₄ est une chaine alkyle, alkyle-aryle C₁ -C₃₀ choisie en fonction de la masse moléculaire dudit polymère selon les règles suivantes :
- pour un polymère ayant une masse moléculaire inférieure à environ 10⁵ daltons, R₄ contient au moins deux atomes de carbone,
- pour un polymère ayant une masse moléculaire comprise entre environ 10⁵ et 2,5 10⁶ daltons, R₄ contient au moins quatre atomes de carbone,
b) un polymère, dénommé HM PAM issu de la polymérisation de motifs hydrophiles avec un motif hydrophobe, le motif hydrophile comporte :
- de l'acrylamide suivant la formule suivante : 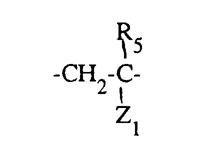 où R₅ est H ou CH₃, et Z₁ est CONH₂,
- et éventuellement des co-monomères d'acide acrylique, d'acrylate ou de sulfonate suivant la formule suivante : 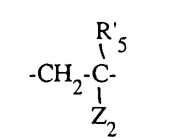
où R'₅ est H ou CH₃, et Z₂ est COOH ou COO⁻, M⁺ ou CONHR₁SO₃⁻, M⁺; R₁ est H ou un radical alkyle, aryle ou alkyl-aryle de C₁-C₃₀,
et le motif hydrophobe dudit polymère HM PAM a au moins l'une des formes suivantes : N-alkylacrylamide, alkylacrylate, acrylamide N-substituée ou un acrylate substitué, la partie substitué étant un tensio-actif non ionique, ledit motif hydrophobe ayant la formulation générale suivante : 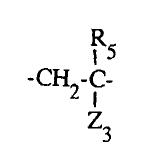 où R₅ est H ou CH₃,et Z₃ est COOR₇, COOR₂, CONR₁R₂, ou CONR₁R₇, R₇ étant un tensioactif non ionique et R₂ un radical alkyle, aryle ou alkyl-aryle de C₁-C₃₀, R₁ est H ou un radical alkyle, aryle ou alkyl-aryle de C₁-C₃₀,
c) un dérivé cellulosique modifié hydrophobiquement,
d) un polymère du type polysaccharide ayant une structure moléculaire rigide ou semi-rigide en double ou triple hélice.

2. Fluide selon la revendication 1, caractérisé en ce que le polymère Hb1 a environ pour x la valeur de 0,8, en ce que R₄ comporte quatre atomes de carbone et en ce que ledit polymère a une masse moléculaire comprise entre 10⁴ et 5 10⁴ daltons, et préférentiellement proche de 1,7 10⁴ daltons.

3. Fluide selon l'une des revendications 1 ou 2, caractérisé en ce que le polymère HM PAM a une masse moléculaire comprise entre 10⁶ et 10⁷ daltons et un taux de motifs hydrophobes compris entre 0,5 et 5%.

4. Fluide selon la revendication 3, caractérisé en ce que le polymère HM PAM, dénommé alors H1PAM a R₅=CH₃, Z₃=COOR₇ avec R₇=C₉H₁₉, une masse moléculaire d'environ 8 10⁶ daltons et un taux de motifs hydrophobes compris entre 0,5 et 1,5%.

5. Fluide selon l'une des revendications 1 à 4, caractérisé en ce que ledit dérivé cellulosique est de la cellulose hydroxy éthylée modifiée hydrophobiquement.

6. Fluide selon la revendication 5, caractérisé en ce que la cellulose hydroxy éthylée modifiée comporte un radical alkyle hydrophobe comportant entre 4 et 25 atomes de carbone, et préférentiellement entre 8 et 18.

7. Fluide selon l'une des revendications S ou 6, caractérisé en ce que la masse moléculaire de la cellulose hydroxy éthylée modifiée est inférieure à 2000000 daltons et préférentiellement comprise entre 20000 et 500000 daltons.

8. Fluide selon l'une des revendications 1 à 7, caractérisé en ce que le polymère du type polysaccharide est choisi parmi le groupe formé par le xanthane et le scléroglucane.

9. Fluide selon l'une des revendications 1 à 8, caractérisé en ce qu'il comporte au moins un électrolyte à des concentrations pouvant atteindre la saturation.

10. Fluide selon la revendication 9, caractérisé en ce ledit électrolyte est choisi dans le groupe constitué par le chlorure, le bromure, le carbonate, l'acétate, le formiate, le sulfate, le silicate, le phosphate, de sodium, de potassium, de calcium, de magnésium, ou de zinc.

11. Fluide selon l'une des revendications 1 à 10, caractérisé en ce qu'il comporte entre 0,5 et 30 g/l de Hb1, d'un dérivé cellulosique modifié hydrophobiquement, de HM PAM et entre 0,5 et 20 g/l de polymère du type polysaccharide.

12. Fluide selon la revendication 11, caractérisé en ce qu'il comporte entre 0,5 et 10 g/l de H3, de HM HEC et de H1PAM, entre 1 et 5 g/l de polymère du type polysaccharide, préférentiellement du xanthane, entre 5 et 100 g/l de KCl ou de NaCl et entre 0 et 30 g/l d'argile réactive.

13. Procédé mis en oeuvre dans un puits foré à travers au moins une formation géologique ayant une certaine perméabilité, ledit procédé comportant au moins l'une des opérations suivantes : forage d'un puits, conditionnement d'un puits, intervention dans un puits, caractérisé en ce que l'on utilise un fluide selon l'une des revendications 1 à 12.

14. Procédé selon la revendication 13 dans lequel ladite formation géologique comporte des argiles réactives, caractérisé en ce que l'on contrôle l'inhibition du gonflement et/ou la dispersion desdites argiles par ledit fluide en optimisant la quantité de polymère Hb1.

15. Procédé selon l'une des revendications 13 ou 14, caractérisé en ce que la rhéologie dudit fluide est ajustée en optimisant la quantité de polymère du type polysaccharide.

16. Procédé selon l'une des revendications 13 à 15, caractérisé en ce que l'on contrôle la réduction de filtration en optimisant la quantité de dérivé cellulosique modifié hydrophobiquement.

17. Procédé selon l'une des revendications 13 à 16, caractérisé en ce que l'on règle la capacité du fluide à ne pas déliter des débris solides en optimisant la quantité de HM PAM dans ledit fluide.

18. Procédé selon l'une des revendications 13 à 17, caractérisé en ce que la formulation dudit fluide ne comporte pas d'adjonction d'argiles réactives.

19. Application du procédé selon la revendication 18 au forage de petit diamètre ou à forte inclinaison par rapport à la verticale.

## Patentansprüche

1. Flüssigkeit (Fluid), wie sie in einem Bohrloch verwendet wird, das durch mindestens eine permeable geologische Formation gebohrt worden ist, dadurch gekennzeichnet, daß sie in Form einer wäßrigen Lösung enthält eine wirksame Menge
a) eines Polymers, als Hb1 bezeichnet, mit einer Struktur vom Typ (Hb)-(Hy)- mit einer statistischen Verteilung, wie sie erhalten wird bei der radikalischen Polymerisation von ethylenischen Monomeren, die Carboxyl-Funktionen enthalten, insbesondere eines Acrylat/C₁-C₃₀-Alkylacrylat-Copolymers mit der folgenden Formel: 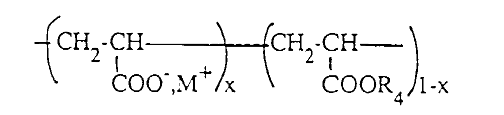 worin bedeuten: x eine Zahl zwischen 0,4 und 0,8, M H oder Na oder K oder irgendein anderes monovalentes lon und worin die Länge der hydrophoben Einheiten R₄ eine C₁-C₃₀-Alkyl- oder Alkylaryl-Kette ist, die ausgewählt wird als Funktion der Molekularmasse des genannten Polymers nach den folgenden Regeln:
- für ein Polymer mit einer Molekularmasse von weniger als etwa 10⁵ Dalton enthält R₄ mindestens zwei Kohlenstoffatome,
- für ein Polymer mit einer Molekularmasse zwischen etwa 10⁵ und etwa 2,5 . 10⁶ Dalton enthält R₄ mindestens 4 Kohlenstoffatome,
b) eines Polymers, als HM PAM bezeichnet, wie es bei der Polymerisation von hydrophilen Einheiten mit einer hydrophoben Einheit erhalten wird, wobei die hydrophile Einheit umfaßt:
- ein Acrylamid der folgenden Formel: 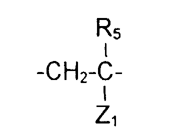 worin R₅ für H oder CH₃ und Z₁ für CONH₂ stehen, und
- gegebenenfalls Acrylsäure-, Acrylat- oder Sulfonat-Co-Monomere der folgenden Formel: 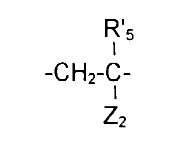 worin R'₅ für H oder CH₃ und Z₂ für COOH oder COO⁻,M⁺ oder
CONHR₁SO₃⁻,M⁺ stehen, wobei R₁ H oder einen C₁-C₃₀-Alkyl-, -Aryl- oder -Alkyl-Arylrest bedeutet, und
die hydrophobe Einheit des genannten Polymers HM PAM mindestens eine der folgenden Formen aufweist: N-Alkylacrylamid, Alkylacrylat, N-substituiertes Acrylamid oder ein substituiertes Acrylat, wobei der substituierte Abschnitt ein nicht-ionisches Tensid ist und die genannte hydrophobe Einheit die folgende allgemeine Formel hat: 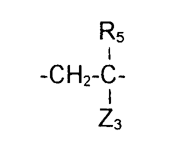 worin R₅ für H oder CH₃ und Z₃ für COOR₇, COOR₂, CONR₁R₂ oder CONR₁R₇ stehen, wobei R₇ ein nicht-ionisches Tensid, R₂ einen C₁-C₃₀-Alkyl-, -Aryl- oder -Alkylaryl-Rest und R₁ H oder einen C₁-C₃₀-Alkyl-, -Aryl- oder -Alkyl-Arylrest bedeuten,
c) eines hydrophob modifizierten Cellulose-Derivats und
d) eines Polymers vom Polysaccharid-Typ, das eine steife oder halbsteife Doppel- oder Dreifachhelix-Molekülstruktur aufweist.

2. Flüssigkeit nach Anspruch 1, dadurch gekennzeichnet, daß in dem Polymer Hb1 x den Wert 0,8 hat und R₄ 4 Kohlenstoffatome aufweist und daß das genannte Polymer eine Molekularmasse zwischen 10⁴ und 5 . 10⁴ Dalton, vorzugsweise etwa 1,7 . 10⁴ Dalton, aufweist.

3. Flüssigkeit nach einem der Ansprüche 1 oder 2, dadurch gekennzeichnet, daß das Polymer HM PAM eine Molekularmasse zwischen 10⁶ und 10⁷ Dalton und einen Gehalt an hydrophoben Einheiten zwischen 0,5 und 5 % aufweist.

4. Flüssigkeit nach Anspruch 3, dadurch gekennzeichnet, daß das Polymer HM PAM, jetzt als H 1PAM bezeichnet, worin R₅=CH₃, Z₃=COOR₇ mit R₇=C₉H₁₉, eine Molekularmasse von etwa 8 . 10⁶ Dalton und einen Gehalt an hydrophoben Einheiten zwischen 0,5 und 1,5 % aufweist.

5. Flüssigkeit nach einem der Ansprüche 1 bis 4, dadurch gekennzeichnet, daß das genannte Cellulose-Derivat hydrophob modifizierte ethylierte Hydroxyethylcellulose ist.

6. Flüssigkeit nach Anspruch 5, dadurch gekennzeichnet, daß die modifizierte ethylierte Hydroxycellulose einen hydrophoben Alkylrest mit 4 bis 25 Kohlenstoffatomen, vorzugsweise 8 bis 18 Kohlenstoffatomen, enthält.

7. Flüssigkeit nach einem der Ansprüche 5 oder 6, dadurch gekennzeichnet, daß die Molekularmasse der modifizierten ethylierten Hydroxycellulose unter 2 000 000 Dalton und vorzugsweise zwischen 20 000 und 500 000 Dalton liegt.

8. Flüssigkeit nach einem der Ansprüche 1 bis 7, dadurch gekennzeichnet, daß das Polymer vom Polysaccharid-Typ ausgewählt wird aus der Gruppe, die besteht aus Xanthan und Scleroglucan.

9. Flüssigkeit nach einem der Ansprüche 1 bis 8, dadurch gekennzeichnet, daß sie mindestens einen Elektrolyten in Konzentrationen, welche die Sättigung erreichen können, enthält.

10. Flüssigkeit nach Anspruch 9, dadurch gekennzeichnet, daß der genannte Elektrolyt ausgewählt wird aus der Gruppe, die besteht aus einem Chlorid, Bromid, Carbonat, Acetat, Formiat, Sulfat, Silicat und Phosphat von Natrium, Kalium, Calcium, Magnesium oder Zink.

11. Flüssigkeit nach einem der Ansprüche 1 bis 10, dadurch gekennzeichnet, daß sie 0,5 bis 30 g/l Hb1, eines hydrophob modifizierten Cellulose-Derivats und HM PAM und 0,5 bis 20 g/l Polymer vom Polysaccharid-Typ enthält.

12. Flüssigkeit nach Anspruch 11, dadurch gekennzeichnet, daß sie 0,5 bis 10 g/l H3, HM HEC und H1 PAM, 1 bis 5 g/l Polymer vom Polysaccharid-Typ, vorzugsweise Xanthan, 5 bis 100 g/l KCI oder NaCl und 0 bis 30 g/l reaktionsfähigen Ton enthält.

13. Verfahren zur Anwendung in einem Bohrloch, das mindestens durch eine geologische Formation mit einer bestimmten Permeabilität (Durchlässigkeit) gebohrt worden ist, wobei das genannte Verfahren mindestens einen der folgenden Arbeitsgänge umfaßt:
Bohren eines Bohrloches, Konditiionieren eines Bohrloches und Behandeln eines Bohrloches,
dadurch gekennzeichnet, daß man eine Flüssigkeit (ein Fluid) nach einem der Ansprüche 1 bis 12 verwendet.

14. Verfahren nach Anspruch 13, bei dem die genannte geologische Formation reaktionsfähige Tone umfaßt, dadurch gekennzeichnet, daß man die Inhibierung der Aufquellung und/oder Dispersion der genannten Tone durch die genannte Flüssigkeit steuert (kontrolliert), indem man die Menge an Polymer Hb1 optimiert.

15. Verfahren nach einem der Ansprüche 13 oder 14, dadurch gekennzeichnet, daß man die Rheologie der genannten Flüssigkeit einstellt, indem man die Menge des Polymers vom Polysaccharid-Typ optimiert.

16. Verfahren nach einem der Ansprüche 13 bis 15, dadurch gekennzeichnet, daß man die Abnahme der Filtration steuert (kontrolliert) durch Optimierung der Menge an hydrophob modifiziertem Cellulose-Derivat.

17. Verfahren nach einem der Ansprüche 13 bis 16, dadurch gekennzeichnet, daß man die Fähigkeit der Flüssigkeit, feste Bruchstücke nicht aufzuspalten (zu fragmentieren), dadurch einstellt (regelt), daß man die Menge an HM PAM in der genannten Flüssigkeit optimiert.

18. Verfahren nach einem der Ansprüche 13 bis 17, dadurch gekennzeichnet, daß die Formulierung der genannten Flüssigkeit keine Zusätze an reaktionsfähigen Tonen umfaßt.

19. Anwendung des Verfahrens nach Anspruch 18 zur Erzeugung eines Bohrlochs mit einem kleinen Durchmesser oder mit einer starken Neigung gegenüber der Vertikalen.

## Claims

1. A fluid used in a well bored through at least one permeable geological formation, characterised in that it contains in aqueous solution an active quantity of:
a) a polymer called Hb1 having a structure of the **-(Hb)-(Hy)-** type with a statistical distribution, said structure resulting from the radical polymerisation of ethylene monomers containing carboxylic functions, in particular a C₁-C₃₀ acrylate/alkyl acrylate copolymer corresponding to the following formula: 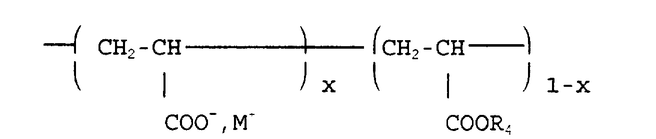 where x ranges between 0.4 and 0.8, where M is H or Na or K or any other monovalent ion and where the length of the hydrophobic units R₄ is a C₁-C₃₀ alkyl, alkylaryl chain selected as a function of the molecular mass of said polymer in accordance with the following rules:
- for a polymer with a molecular mass of less than approximately 10⁵ daltons, R₄ contains at least two carbon atoms,
- for a polymer with a molecular mass ranging between approximately 10⁵ and 2.5 10⁶ daltons, R₄ contains at least four carbon atoms,
b) a polymer known as HM PAM, obtained by polymerising hydrophilic units with a hydrophobic unit, the hydrophilic unit containing:
- acrylamide of the following formula: 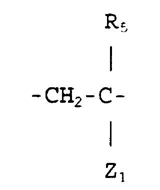 where R₅ is H or CH₃ and Z₁ is CONH₂,
- and possibly acrylic acid, acrylate or sulphonate comonomers of the following formula: 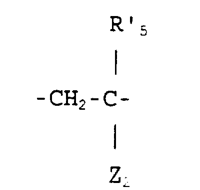 where R'₅ is H or CH₃ and Z₂ is COOH or COO⁻, M⁺ or CONHR₁SO₃⁻, M⁺; R₁ is H or a C₁-C₃₀ alkyl, aryl or alkylaryl radical,
and the hydrophobic unit of said polymer HM PAM will be of at least one of the following forms: N-alkylacrylamide, alkylacrylate, N-substituted acrylamide or a substituted acrylate, the substituted part being a non-ionic surfactant, the hydrophobic unit being of the following general formula: 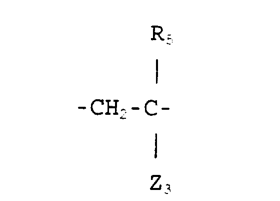 where R₅ is H or CH₃ and Z₃ is COOR₇, COOR₂, CONR₁R₂ or CONR₁R₇, R₇ being a non ionic surfactant and R₂ an alkyl, aryl or alkylaryl radical of C₁-C₃₀, R₁ is H or an alkyl, aryl or alkylaryl radical of C₁-C₃₀,
c) a hydrophobically modified cellulose derivative,
d) a polymer of the polysaccharide type having a double or triple helical rigid or semi-rigid molecular structure.

2. A fluid as claimed in claim 1, characterised in that the value x of the polymer Hb1 is approximately 0.8, R₄ has four carbon atoms and said polymer has a molecular mass ranging between 10⁴ and 5 10⁴ daltons and preferably close to 1.7 10⁴ daltons.

3. A fluid as claimed in one of claims 1 or 2, characterised in that the polymer HM PAM has a molecular mass ranging between 10⁶ and 10⁷ daltons and a concentration of hydrophobic units ranging between 0.5 and 5%.

4. A fluid as claimed in claim 3, characterised in that the polymer HM PAM has R₅=CH₃, Z₃=COOR₇ with R₇=C₉H₁₉, a molecular mass of approximately 8 10⁶ daltons and a concentration of hydrophobic units ranging between 0.5 and 1.5%, in which case it is called H1PAM.

5. A fluid as claimed in one of claims 1 to 4, characterised in that said cellulose derivative is hydrophobically modified hydroxyethyl cellulose.

6. A fluid as claimed in claim 5, characterised in that the modified hydroxyethyl cellulose contains a hydrophobic alkyl radical with between 4 and 25 carbon atoms and preferably between 8 and 18.

7. A fluid as claimed in one of claims 5 or 6, characterised in that the molecular mass of the modified hydroxyethyl cellulose is less than 2,000,000 daltons and preferably between 20,000 and 500,000 daltons.

8. A fluid as claimed in one of claims 1 to 7, characterised in that the polymer of the polysaccharide type is selected from among the group comprising xanthan and scleroglucan.

9. A fluid as claimed in one of claims 1 to 8, characterised in that it contains at least one electrolyte at concentrations which may reach saturation.

10. A fluid as claimed in claim 9, characterised in that said electrolyte is selected from the group comprising sodium, potassium, calcium, magnesium or zinc chloride, bromide, carbonate, acetate, formate, sulphate, silicate, phosphate.

11. A fluid as claimed in one of claims 1 to 10, characterised in that it contains between 0.5 and 30 g/l of Hb1, of a hydrophobically modified cellulose derivative, of HM PAM and between 0.5 and 20 g/l of polymer of the polysaccharide type.

12. A fluid as claimed in claim 11, characterised in that it contains between 0.5 and 10 g/l of H3, of HM HEC and of H1PAM, between 1 and 5 g/l of polymer of the polysaccharide type, preferably xanthan, between 5 and 100 g/l of KCl or NaCl and between 0 and 30 g/l of reactive clay.

13. A process implemented in a well bored through at least one geological formation having a certain permeability, said process incorporating at least one of the following operations: well drilling, well completion, workovers in a well, characterised in that a fluid as claimed in one of claims 1 to 12 is used.

14. A process as claimed in claim 13, in which said geological formation contains reactive clays, characterised in that the inhibition of swelling and/or the dispersion of said clays by said fluid are controlled by optimising the quantity of polymer Hb1.

15. A process as claimed in one of claims 13 or 14, characterised in that the rheology of said fluid is adjusted by optimising the quantity of polymer of the polysaccharide type.

16. A process as claimed in one of claims 13 to 15, characterised in that filtration reduction is controlled by optimising the quantity of hydrophobically modified cellulose derivative.

17. A process as claimed in one of claims 13 to 16, characterised in that the capacity of the fluid not to break up cuttings is controlled by optimising the quantity of HM PAM in said fluid.

18. A process as claimed in one of claims 13 to 17, characterised in that the formulation of said fluid does not include the addition of reactive clays.

19. Application of the process as claimed in claim 18 to slim-hole drilling or drilling at an incline sharply deviating from the vertical.
